# EUROPÄISCHE PATENTSCHRIFT

(11) **EP 1 964 042 B1**
(45) Veröffentlichungstag und Bekanntmachung des Hinweises auf die Patenterteilung: **19.01.2011**
(21) Anmeldenummer: 06829408.1
(22) Anmeldetag: 08.12.2006
(51) Int. Cl.: G06Q 20/00, H04L 9/32, G06F 7/00

(54) **VERFAHREN ZUR VORBEREITUNG EINER CHIPKARTE FÜR ELEKTRONISCHE SIGNATURDIENSTE**
METHOD FOR THE PREPARATION OF A CHIP CARD FOR ELECTRONIC SIGNATURE SERVICES
PROCEDE DE PREPARATION D'UNE CARTE A PUCE POUR DES SERVICES DE SIGNATURE ELECTRONIQUE

(30) Priorität: 24.12.2005 DE 102005062307
(43) Veröffentlichungstag der Anmeldung: 03.09.2008
(73) Patentinhaber: T-Mobile International AG, 53227 Bonn (DE)
(72) Erfinder: DUPRE, Michael, 53757 Sankt Augustin (DE)
(74) Vertreter: Riebling, Peter
(86) Internationale Anmeldenummer: PCT/EP2006/011796
(87) Internationale Veröffentlichungsnummer: WO 2007/073842

(56) Entgegenhaltungen:
- EP-A1- 1 225 534
- WO-A-01/22373
- WO-A-03/013167
- DE-A1- 19 947 986
- US-A1- 2002 023 217
- US-A1- 2002 042 879
- US-A1- 2002 129 257

## Beschreibung

Die Erfindung betrifft ein Verfahren zur Vorbereitung einer Chipkarte für elektronische Signaturdienste. Insbesondere betrifft die Erfindung die Vorbereitung von Teilnehmeridentifikationskarten, sogenannte SIM-Karten, für elektronische Signaturdienste über Mobilfunk.

Bei einer elektronischen Signatur handelt es sich um elektronische Daten, welche die Authentizität und Integrität von elektronischen Informationen, meist elektronische Dokumente, sicherstellen sollen. Darüber hinaus soll eine elektronische Signatur die Identität des Signierenden gewährleisten. Diese Merkmale sollen wiederum mit Hilfe der elektronischen Signatur verifizierbar sein. Mit diesen Eigenschaften soll die elektronische Signatur das elektronische Äquivalent zur eigenhändigen Unterschrift darstellen. Je nach angewendeter Signaturtechnologie, vorhandenem Einsatzszenario sowie der gegebenen Rechtslage werden diese angestrebten Eigenschaften der elektronischen Signatur erreicht.

Eine elektronische Signatur basiert meist auf asymmetrischen Kryptoverfahren. Der bekannte öffentliche Schlüssel, der sogenannte public key, eines Unterzeichners erlaubt die Überprüfung seiner Signatur, die mit seinem geheimen Schlüssel, dem sogenannten private key erzeugt wurde. Im Gegensatz zu qualifizierten Signaturen müssen jedoch bei fortgeschrittenen Signaturen, geheimer und öffentlicher Schlüssel dem Signaturersteller nicht zugeordnet sein. Somit kann zwar die Authentizität und Integrität der signierten Daten geprüft werden, jedoch ist eine Identifizierung des Unterzeichners über ein Zertifikat nicht möglich. In diesem Fall können beispielsweise biometrische Verfahren, wie z. B. die eigenhängige Unterschrift, die während des Signierens erfasst und verschlüsselt in das Dokument eingebettet wird, zur Identifizierung beitragen. Zur Sicherung der biometrischen Daten werden diese zusätzlich in den Hashwert (Prüfsumme) einbezogen. Bei einer Signaturprüfung wird dann neben den signierten Daten auch die Authentizität und Integrität des Identifizierungsmerkmals geprüft.

Zur Identifikation des Signierenden und Freigabe des Signaturdienstes wird beispielsweise eine Geheimzahl (PIN) verwendet. Diese PIN wird bisher von einem Diensteanbieter erzeugt, einem Benutzer eindeutig zugeordnet (personalisiert) und zusammen mit dem Signaturschlüssel über einen Kommunikationsweg, beispielsweise per Brief, an den Benutzer übermittelt. Bei diesem Verfahren besteht die Gefahr, dass ein Dritter durch Ausspionieren der Signaturdaten und der PIN diese Daten missbräuchlich verwenden und sich als Signierender ausgeben kann, Zusätzlich wird in der Regel durch die PIN-Generierung nicht unerheblicher Aufwand generiert.

US 2002/00 42879 A1 offenbart ein elektronisches Signatursystem, bei welchem eine elektronische Signatur-Chipkarte verwendet wird, mit welcher Informationen zwischen einem Benutzer der Signatur-Chipkarte und einem Signaturportal ausgetauscht werden können. Auf der Signatur-Chipkarte sind Signaturdaten gespeichert. Ein Benutzer kann sich durch Eingabe einer Geheimzahl (PIN) oder biometrischer Daten gegenüber der Signatur-Chipkarte authentifizieren. War die Authentifizierung erfolgreich, generiert die Signatur-Chipkarte einen Autorisationsschlüssel, der an das Signaturportal übermittelt wird, weiches dann die elektronische Signatur und eine Authentifizierungsnummer ausgibt.

US 200210023217 A1 offenbart ein Verfahren zur Herstellung von elektronischen Geräten zur Erzeugung von digitalen Signaturen. In einer sicheren Umgebung wird ein asymmetrisches Schlüsselpaar erzeugt und zusammen mit anderen Informationen auf dem elektronischen Gerät gespeichert.

Ein Verfahren zur Vorbereitung einer Chipkarte für elektronische Signaturdienste ist im oben genannten Stand der Technik nicht angegeben.

Die Aufgabe der Erfindung liegt daher darin, ein Verfahren zur Vorbereitung einer Chipkarte für elektronische Signaturdienste vorzuschlagen, das einfach zu realisieren ist und eine gute Sicherheit gegen Angriffe bietet.

Diese Aufgabe wird durch ein Verfahren mit den Merkmalen des Patentanspruchs 1 gelöst.

Erfindungsgemäß wird ein Verfahren vorgeschlagen, bei dem Informationen zwischen einem Benutzer der Chipkarte und einem Signaturportal ausgetauscht werden, und ein asymmetrisches Schlüsselpaar und eine dem asymmetrischen Schlüsselpaar zugeordnete Signatur-PIN unmittelbar auf der Chipkarte mittels einer auf der Chipkarte ausführbaren Softwareapplikation generiert werden.

Somit wird ein einfaches Verfahren bereit gestellt, um eine Chipkartenapplikation für Signaturdienste vorzubereiten. Die Chipkartenapplikation generiert intern ein asymmetrisches Schlüsselpaar, also einen öffentlichen und einen geheimen Schlüssel, und eine Signatur-PIN und sendet den öffentlichen Schlüssel sicher zur Registrierung an ein Signaturportal. Eine Benutzeridentifikation, beispielsweise eine Mobilfunkrufnummer, und ein sogenanntes Token, beispielsweise eine Zufallszahl, werden verwendet, um den Benutzer gegenüber dem Signaturportal bzw. der Chipkarte zu identifizieren und zu authentisieren. Das erfindungsgemäße Verfahren zeichnet sich unter anderem dadurch aus,dass
- die Signatur-PIN innerhalb der Chipkarte erzeugt und anschließend dem Benutzer angezeigt wird. Eine aufwändige Personalisierung und Übermittlung der PIN an den Benutzer entfällt.
- kein spezielles Endgerät zur Durchführung des Verfahrens benötigt wird: jedes SIM-Application-Toolkit-fähige Mobiltelefon ist ausreichend.

Das Signaturportal ist anschließend in der Lage, Transaktionen von der Chipkarte signieren zu lassen. Ein Zertifikat wird nicht notwendigerweise benötigt.

Der Vorteil der Erfindung besteht darin, dass eine bisher durchgeführte und relativ aufwändige Personalisierung einer Signatur-PIN im Signaturportal und eine Übermittlung an den Benutzer entfällt. Da die Generierung der Signatur-PIN durch eine weitere Partei und eine Übermittlung der Signatur-PIN an den Benutzer entfällt, verringert sich auch die Gefahr eines Ausspionierens und Missbrauchs dieser Daten. Ein weiterer Vorteil besteht darin, dass die Signatur-PIN dem Benutzer von der Chipkarte vorgegeben wird und daher automatisch eine möglichst "sichere/zufällige" Signatur-PIN gewählt wird.

Vorteilhafte Ausgestaltungen und bevorzugte Weiterbildungen der Erfindung sind in den abhängigen Ansprüchen angegeben.

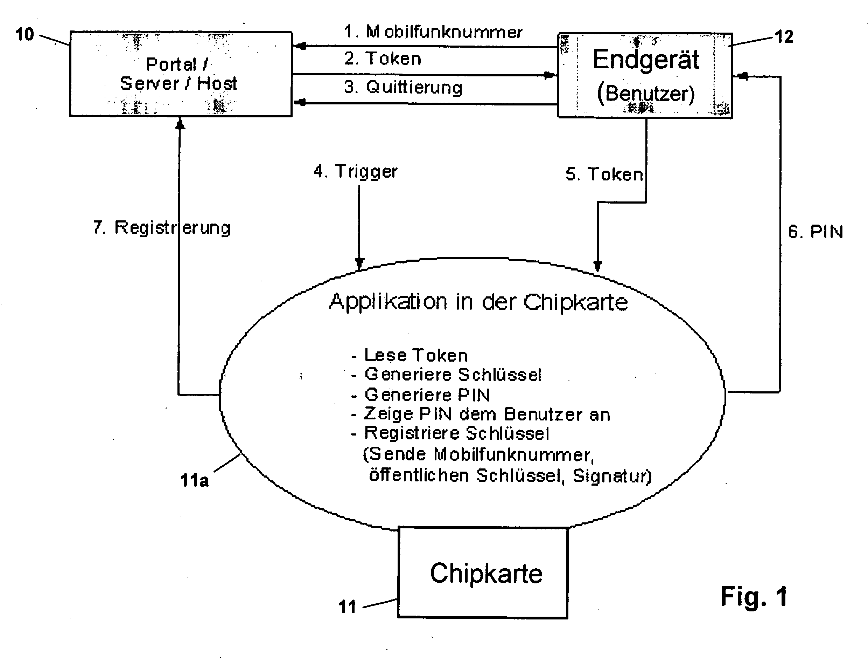

Anhand von Figur 1 wird ein vereinfachter Ablauf des erfindungsgemäßen Verfahren näher erläutert.

Erfindungsgemäß ist ein Signaturportal 10 eingerichtet, das die Durchführung von Signaturdiensten koordiniert und diejenigen Benutzer registriert und verwaltet, die elektronische Signaturdienste in Anspruch nehmen wollen. Ein Benutzer, der Signaturdienste in Anspruch nehmen möchte, benötigt eine elektronische Chipkarte 11, auf der eine entsprechende Softwareapplikation zur Vorbereitung und Durchführung von Signaturdiensten installiert ist. Zur Eingabe und Ausgabe von Daten in bzw. aus der Chipkarte 11 ist ein Endgerät 12 notwendig, das Daten von der Chipkarte auslesen und Daten auf die Chipkarte schreiben kann und über entsprechende Eingabe- und Ausgabeeinrichtungen für die Daten, wie z. B. eine Tastatur und ein Anzeigefeld, verfügt. Ferner sind entsprechende Kommunikationsmittel notwendig, über die das Endgerät 12 und die mit dem Endgerät betriebene Chipkarte 11 mit dem Signaturserver 10 kommunizieren können. In vorteilhafter Weise kann ein modernes Mobiltelefon als Endgerät 12 verwendet werden, da es über entsprechende Ein- und Ausgabeeinheiten und relativ leistungsfähige Datenverarbeitungseinrichtungen verfügt. Ferner kann das Mobiltelefon unmittelbar als Kommunikationsmittel zum Aufbau einer Kommunikationsverbindung zwischen der Chipkarte 11 und dem Signaturportal 10 verwendet werden. Als Endgerät kann aber beispielsweise auch ein Personal Computer dienen, der beispielsweise über das Internet mit dem Signaturportal verbunden ist. Im nachfolgenden Beispiel ist die Verwendung eines Mobiltelefons als Endgerät beschrieben. Es wird vorausgesetzt, dass der Benutzer gleichzeitig Teilnehmer eines Mobilfunknetzes ist, in welchem sich das Endgerät registrieren kann.

### Schritt 1:

Der Benutzer, der dem Signaturportal bereits bekannt ist, baut über sein Endgerät 12 eine Verbindung zum Signaturportal 10 auf, indem er sich dort mittels einer Benutzeridentifikation anmeldet. Je nach verwendeter Benutzeridentifikation wird diese vom Benutzer eingegeben, sofern sie vom Signaturportal nicht automatisch ermittelt werden kann. Beispielsweise kann als Benutzerkennung die Mobilfunknummer des Benutzers verwendet werden, die automatisch an das Signaturportal übertragen wird (CLIP-Funktion). Sobald der Benutzer eine Verbindung zum Signaturportal 10 hergestellt hat aktiviert er im Signaturportal 10 eine Funktion zur Generierung eines neuen Schlüsselpaars auf der Chipkarte 11.

### Schritt 2:

Das Signaturportal 10 erzeugt daraufhin ein Token, z. B. eine lange Nummer in Form einer Zufallszahl, und speichert sie in einem entsprechenden, dem Benutzer zugeordneten Datensatz. Das Token wird dem Benutzer auf separaten Wege zugesendet, z. B. per Brief.

### Schritt 3:

Der Benutzer quittiert den Empfang des Tokens, beispielsweise mit seiner Unterschrift.

### Schritt 4:

Auf der Chipkarte 11 ist eine entsprechende Softwareapplikation 11a installiert, die nun vom Benutzer gestartet werden kann. Dies kann der Benutzer z. B. selbst tun, nachdem er eine Kurznachricht (SMS) vom Signaturportal erhalten hat (Trigger), oder automatisch durch eine OTA-SMS geschehen.

### Schritt 5:

Die Softwareapplikation 11a erfragt vom Benutzer das ihm zugeschickte Token, z. B. mit dem proaktiven UICC-Kommando "GET INPUT". Der Benutzer gibt das Token über die Tastatur des Endgeräts 12 ein.
Die Softwareapplikation 11a generiert intern ein neues asymmetrisches Schlüsselpaar. Ein gegebenenfalls bereits vorhandenes Schlüsselpaar wird gelöscht, z. B. wenn der Benutzer das Schlüsselpaar oder eine damit verbundene Signatur-PIN erneuern möchte.

### Schritt 6:

Die Softwareapplikation 11a generiert unter Verwendung des Tokens eine Signatur-PIN und gibt diese dem Benutzer auf der Anzeige des Endgeräts 12 aus, z. B. mit dem proaktiven UICC-Kommando "DISPLAY TEXT". Dies ermöglicht, dass die Signatur-PIN außerhalb der Chipkarte 11 nur dem Benutzer bekannt ist und dennoch zufällig gewählt ist.

### Schritt 7:

Die Softwareapplikation 11a registriert den öffentlichen Schlüssel im Signaturportal 10. Dazu erzeugt sie mit dem neu generierten geheimen (privaten) Schlüssel eine Signatur über eine Datenstruktur, die mindestens den öffentlichen Schlüssel und das Token, sowie gegebenenfalls eine Benutzeridentifikation enthält. Die Signatur und der öffentliche Schlüssel sowie gegebenenfalls die Benutzeridentifikation werden von der Softwareapplikation 11a an das Signaturportal 10 versendet. Die Übermittlung kann beispielsweise über SMS des Mobilfunknetzes erfolgen. Werden diese Daten per SMS versendet, kann die Mobilfunknummer als Benutzeridentifikation verwendet werden, dass diese bei SMS-Versand dem Empfänger (hier: dem Signaturportal 10) automatisch mitgeteilt wird. Somit kann das Signaturportal 10 die SMS dem Benutzer eindeutig zuordnen.

Das Signaturportal 10, welches das Token generiert hat und daher kennt, verifiziert die Signatur und authentisiert damit den Benutzer. Die Signatur gilt dem Signaturportal 10 als Nachweis, dass der Benutzer den zugehörigen privaten Schlüssel besitzt.

Die Signatur über die Datenstruktur, die das Token enthält, authentifiziert den Benutzer gegenüber dem Signaturportal. Ein Angriff ist um so schwieriger, je länger die Zeichenfolge des Tokens ist. Zusätzlich könnte das Signaturportal einen Fingerabdruck des Benutzers über den öffentlichen Schlüssel anzeigen lassen, den auch die Softwareapplikation 11a auf der Chipkarte 11 berechnen und anzeigen kann und den der Benutzer selbst verifizieren und gegebenenfalls gegenüber dem Signaturportal 10 bestätigen muss.

Hat der Benutzer seine Signatur-PIN vergessen, kann er die beschriebene Prozedur zur Generierung eines neuen Schlüsselpaares und einer zugeordneten Signatur-PIN jederzeit erneut starten. In diesem Fall muss das vorhandene Schlüsselpaar im Signaturportal gelöscht werden. Die Chipkartenapplikation löscht ebenfalls das vorhandene Schlüsselpaar und generiert sowohl den Schlüssel als auch die PIN neu.

## Patentansprüche

1. Verfahren zur Vorbereitung einer Chipkarte (11) für elektronische Signaturdienste, bei dem Informationen zwischen einem Benutzer der Chipkarte und einem Signaturportal (10) ausgetauscht werden, **gekennzeichnet durch** die Schritte:
- Anmelden des Benutzers beim Signaturportal (10),
- Generieren eines dem Benutzer zugeordneten Tokens **durch** das Signaturportal (10) und Abspeichern des Tokens im Signaturportal (10),
- Übermitteln des Tokens vom Signaturportal (10) an den Benutzer,
- Generieren des asymmetrischen Schlüsselpaars, bestehend aus einem öffentlichen Schlüssel und einem geheimen Schlüssel, und einer dem asymmetrischen Schlüsselpaar zugeordneten Signatur-PIN mittels einer auf der Chipkarte (11) ausführbaren Softwareapplikation (11a) und unter Verwendung des Tokens,
- Mitteilung der Signatur-PIN **durch** die Chipkarte an den Benutzer,
- Übermitteln des öffentlichen Schlüssel und einer Signatur von der Chipkarte an das Signaturportal (10),
- Registrieren des öffentlichen Schlüssels des Benutzers zusammen mit dem dem Benutzer zugeordneten Token im Signaturportal.

2. Verfahren nach Anspruch 1, **dadurch gekennzeichnet, dass** die Signatur-PIN ohne Mitwirkung oder Einflussnahme des Benutzer generiert wird.

3. Verfahren nach einem der vorhergehenden Ansprüche, **dadurch gekennzeichnet, dass** die Signatur das Token und wahlweise zusätzliche Daten zur Identifikation des Benutzers enthält, wobei das Token und die zusätzlichen Daten mit dem geheimen Schlüssel des Benutzers verschlüsselt wurden.

4. Verfahren nach einem der vorhergehenden Ansprüche, **dadurch gekennzeichnet, dass** das Token auf nicht-elektronischem Weg vom Signaturportal an den Benutzer übermittelt wird.

5. Verfahren nach einem der vorhergehenden Ansprüche, **dadurch gekennzeichnet, dass** der Benutzer und sein öffentlicher Schlüssel anhand der Signatur vom Signaturportal authentifiziert wird.

6. Verfahren nach einem der vorhergehenden Ansprüche, **dadurch gekennzeichnet, dass** als Token eine vom Signaturportal generierte Zufallszahl verwendet wird.

7. Verfahren nach einem der vorhergehenden Ansprüche, **dadurch gekennzeichnet, dass** zur Kommunikation zwischen der Chipkarte (11) und dem Benutzer ein Endgerät (12) verwendet wird.

8. Verfahren nach einem der vorhergehenden Ansprüche, **dadurch gekennzeichnet, dass** zur Kommunikation zwischen der Chipkarte (1) und der dem Signaturportal (11) ein zu einem Möbilkommunikationssystem kompatibles Endgerät (12) verwendet wird.

9. Verfahren nach einem der vorhergehenden Ansprüche, **dadurch gekennzeichnet, dass** das Endgerät (12) als Dateneingabegerät, Datenausgabegerät und als Kommunikationsgerät für den Datenaustausch zwischen der Chipkarte (11) und dem Signaturportal (10) verwendet wird.

10. Verfahren nach einem der vorhergehenden Ansprüche, **dadurch gekennzeichnet, dass** das Endgerät (12) ein Mobiltelefon ist.

11. Softwareapplikation (11 a) mit einem Programmcode, der auf einer chipkarte (11) ausgeführt ein Verfahren nach einem der Ansprüche 1 bis 10 durchführt.

12. Datenverarbeitungsprogrammprodukt, das eine auf einer Chipkarte (11) ausführbare Softwareapplikation (11a) zur Durchführung des Verfahrens nach einem der Ansprüche 1 bis 10 umfasst.

## Claims

1. Method for the preparation of a chip card (11) for electronic signature services, in which information is exchanged between a user of the chip card and a signature portal (10), **characterised by** the steps of:
- logging on of the user to the signature portal (10),
- generation of a token allocated to the user by the signature portal (10) and storage of the token in the signature portal (10),
- transmission of the token from the signature portal (10) to the user,
- generation of the asymmetrical pair of keys, consisting of a public key and a secret key, and a signature PIN allocated to the asymmetrical pair of keys by means of a software application (11a) which can be executed on the chip card (11) and using the token,
- notification of the user of the signature PIN by the chip card,
- transmission of the public key and a signature from the chip card to the signature portal (10),
- registration of the public key of the user together with the token allocated to the user in the signature portal.

2. Method according to claim 1, **characterised in that** the signature PIN is generated without the assistance or influence of the user.

3. Method according to one of the preceding claims, **characterised in that** the signature contains the token and optionally additional data for identification of the user, wherein the token and the additional data are encrypted with the secret key of the user.

4. Method according to one of the preceding claims, **characterised in that** the token is transmitted non-electronically from the signature portal to the user.

5. Method according to one of the preceding claims, **characterised in that** the user and his public key are authenticated by means of the signature by the signature portal.

6. Method according to one of the preceding claims, **characterised in that** a random number generated by the signature portal is used as the token.

7. Method according to one of the preceding claims, **characterised in that** a terminal (12) is used for communication between the chip card (11) and the user.

8. Method according to one of the preceding claims, **characterised in that** a terminal (12) compatible with a mobile communications system is used for communication between the chip card (1) and the signature portal (11).

9. Method according to one of the preceding claims, **characterised in that** the terminal (12) is used as a data input device, data output device and as a communications device for data exchange between the chip card (11) and the signature portal (10).

10. Method according to one of the preceding claims, **characterised in that** the terminal (12) is a mobile telephone.

11. Software application (11a) having a programme code which is executed on the chip card (11) by a method according to one of claims 1 to 10.

12. Data processing program product which comprises a software application (11a) that can be executed on a chip card (11) for carrying out the method according to one of claims 1 to 10.

## Revendications

1. Procédé pour préparer une carte à puce (11) pour des services de signature électronique, selon lequel des informations sont échangées entre un utilisateur de la carte à puce et un portail de signature (10),
**caractérisé par** les étapes suivantes :
- demande de l'utilisateur auprès du portail de signature (10),
- production, par le portail de signature (10), d'un jeton attribué à l'utilisateur et stockage du jeton dans le portail de signature (10),
- transmission du jeton du portail de signature (10) vers l'utilisateur,
- production de la paire de clés asymétrique composée d'une clé publique et d'une clé confidentielle, et d'un PIN de signature attribué à la paire de clés asymétrique à l'aide d'une application logicielle (11a) apte à être exécutée sur la carte à puce (11) et à l'aide du jeton,
- communication du PIN de signature par la carte à puce à l'utilisateur,
- transmission de la clé publique et d'une signature de la carte à puce vers le portail de signature (10),
- enregistrement de la clé publique de l'utilisateur avec le jeton attribué à l'utilisateur, dans le portail de signature.

2. Procédé selon la revendication 1, **caractérisé en ce que** le PIN de signature est produit sans la coopération ou l'influence de l'utilisateur.

3. Procédé selon l'une des revendications précédentes, **caractérisé en ce que** la signature contient le jeton et, au choix, des données supplémentaires pour l'identification de l'utilisateur, le jeton et les données supplémentaires ayant été cryptés avec la clé confidentielle de l'utilisateur.

4. Procédé selon l'une des revendications précédentes, **caractérisé en ce que** le jeton est transmis par le portail de signature à l'utilisateur par voie non électronique.

5. Procédé selon l'une des revendications précédentes, **caractérisé en ce que** l'utilisateur et sa clé publique sont authentifiés par le portail de signature à l'aide de la signature.

6. Procédé selon l'une des revendications précédentes, **caractérisé en ce qu'**on utilise comme jeton un chiffre aléatoire produit par le portail de signature.

7. Procédé selon l'une des revendications précédentes, **caractérisé en ce que** pour la communication entre la carte à puce (11) et l'utilisateur, on utilise un terminal (12).

8. Procédé selon l'une des revendications précédentes, **caractérisé en ce que** pour la communication entre la carte à puce (1) et le portail de signature (11), on utilise un terminal (12) compatible avec un système de communication mobile.

9. Procédé selon l'une des revendications précédentes, **caractérisé en ce que** le terminal (12) est utilisé comme appareil d'entrée de données, comme appareil de sortie de données et comme appareil de communication pour l'échange de données entre la carte à puce (11) et le portail de signature (10).

10. Procédé selon l'une des revendications précédentes, **caractérisé en ce que** le terminal (12) est un téléphone mobile.

11. Application logicielle (11a) avec un code de programme qui, exécuté sur une carte à puce (11), met en oeuvre un procédé selon l'une des revendications 1 à 10.

12. Produit de programme informatique qui comprend une application logicielle (11a) apte à être exécutée sur une carte à puce (11), pour la mise en oeuvre du procédé selon l'une des revendications 1 à 10.
